(19) Europäisches Patentamt
European Patent Office
Office européen des brevets

(11) **EP 2 107 750 A1**

(12) **DEMANDE DE BREVET EUROPEEN**

(43) Date de publication:
**07.10.2009 Bulletin 2009/41**

(51) Int Cl.:
**H04L 27/26** [(2006.01)]    **H04B 3/32** [(2006.01)]

(21) Numéro de dépôt: **09155912.0**

(22) Date de dépôt: **23.03.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **31.03.2008  FR 0852099**

(71) Demandeur: **FRANCE TELECOM**
**75015 Paris (FR)**

(72) Inventeurs:
• **Wahibi, Issam**
  **1070, ANDERLECHT (BE)**
• **Le Masson, Jérôme**
  **22300, LANNION (FR)**
• **Ouzzif, Meryem**
  **22300, LANNION (FR)**

(54)    **Procédé de traitement d'interférences dans un système XDSL**

(57)    L'invention concerne un procédé de traitement d'interférences affectant N signaux ($s_i$) respectivement émis par N terminaux ($T_i$, $T_{i'}$) appartenant à un réseau de communication, lesdits N signaux émis formant les composantes d'un vecteur s, ledit procédé comprend :
- une phase de prétraitement (E2) du vecteur s mettant en oeuvre une annulation des interférences générées entre les différents signaux émis délivrant un vecteur s prétraité,

une phase de traitement (E3-E4, E5) du vecteur s prétraité en vue de réduire l'influence d'interférences externes au système de communication sur lesdits signaux émis délivrant un vecteur s traité.

Fig. 1

## EP 2 107 750 A1

**Description**

L'invention concerne le domaine technique des transmissions de signaux dans des canaux d'un même système de transmission.

Dans les réseaux d'accès, il est connu d'utiliser des techniques de transmission de données de type DSL (pour Digital Subscriber Line, ou ligne numérique d'abonné en français). De telles techniques utilisent une modulation multiporteuses de type DMT (pour Discrete MultiTone, ou multitonalité discrète en français).

Dans un réseau d'accès sur paire de cuivre, chaque ligne active constitutive du câble relie un multiplexeur, disposé par exemple au niveau d'un noeud d'accès, à un utilisateur final situé en aval du noeud d'accès. Pour un ensemble d'utilisateurs finaux donnés, les lignes actives peuvent être regroupées dans un seul câble et être connectées à la sortie d'un premier multiplexeur. Ces lignes actives sont gérées par un premier opérateur en télécommunications. Tandis que d'autres lignes actives du même câble peuvent être gérées par au moins un autre opérateur en télécommunication et être connectées à un autre multiplexeur DSLAM lui aussi situé au niveau du noeud d'accès.

Dans la suite, on appelle « système de transmission » les lignes actives gérées par un opérateur de télécommunication donné à l'intérieur d'une gaine et circulant jusqu'à un même multiplexeur.

Les signaux d'un même câble sont tous transmis dans une étroite bande de fréquence donnée.

Si l'on considère une ligne active d'un câble, les signaux transmis par les autres lignes actives du câble provoquent des interférences engendrant un bruit qui perturbe les signaux transmis sur la ligne active et diminue le débit de transmission pour cette ligne active.

Un tel bruit est particulièrement difficile à éliminer quand il est généré par les canaux externes au système de transmission, pour lesquels l'opérateur du système ne possède aucune information.

On connaît une méthode de traitement des interférences dans un système DSL. La méthode comprend une première phase de traitement de blanchiment des bruits externes au système de transmission et une deuxième phase de traitement simultané des interférences internes au système et des interférences engendrées lors de la phase de blanchiment.

La première phase comprend, par exemple, une étape de décomposition de Cholesky d'une matrice $R_{n'n'}$ de corrélation spatiale de bruits (bruits externes au système plus bruit blanc, on considère qu'il n'y a pas de bruits internes au système) présents sur les lignes actives du système de transmission considéré, exprimant la corrélation entre les différentes sources de bruit. Il comprend également une étape de multiplication du signal reçu par l'inverse d'une matrice G issue de la décomposition de Cholesky de la matrice R de corrélation spatiale de bruit.

La deuxième phase comprend ensuite une étape de décomposition, selon la méthode QR, du produit de la matrice de canal par l'inverse de la matrice G en un produit d'une matrice triangulaire R et d'une matrice orthogonale *Q*. Le procédé comprend ensuite une étape d'annulation du bruit.

Toutefois, ces étapes de traitement demandent des calculs nombreux et complexes, susceptibles de ralentir le temps de traitement des signaux et/ou d'exiger une puissance de calcul importante.

Un objet de l'invention est un procédé de traitement d'interférences affectant N signaux respectivement émis par N terminaux appartenant à un réseau de communication, lesdits N signaux émis formant les composantes d'un vecteur s.

Un tel procédé est particulier en ce qu'il comprend :

- une phase de prétraitement du vecteur s mettant en oeuvre une annulation des interférences générées entre les différents signaux émis délivrant un vecteur s prétraité,
- une phase de traitement du vecteur s prétraité en vue de réduire l'influence d'interférences externes au système de communication sur lesdits signaux émis délivrant un vecteur s traité.

En procédant ainsi, le nombre de calculs à effectuer pour reconstituer les signaux reçus est plus faible que dans les méthodes de l'art antérieur.

En effet, la première phase de traitement implique une inversion ou une décomposition d'une matrice H de réponse du système. Elle engendre des calculs moins complexes si elle est effectuée avant la deuxième phase de traitement du vecteur s en vue de réduire l'influence des interférences entre le système et des perturbateurs externes. En effet, les étapes de traitement à appliquer à la matrice H de réponse du système en vue de réduire l'influence des interférences entre le système et les perturbateurs externes ont pour inconvénients de détruire la propriété de dominance diagonale de la matrice H, ce qui a pour conséquence une augmentation de la complexité des calculs à effectuer pour inverser la matrice H.

Ainsi, le procédé selon l'invention permet une reconstitution performante des signaux émis, tout en diminuant le temps et/ou la puissance de calcul nécessaire à cette reconstitution.

Optionnellement, la phase de traitement comprend une étape de multiplication du vecteur prétraité par l'inverse d'une matrice triangulaire supérieure issue d'une étape de décomposition d'une matrice $\widetilde{R}_{\tilde{n},\tilde{n},}$ de corrélation de bruit liée au vecteur s en un produit d'une matrice triangulaire supérieure et d'une matrice transconjugée de ladite matrice triangulaire supérieure.

La phase de traitement implique généralement un traitement tel qu'une décomposition de Cholesky, par exemple, d'une matrice de corrélation spatiale de bruit.

On sait qu'une matrice de corrélation spatiale de bruit exprime les lois statistiques liant les bruits provenant de différentes sources, c'est-à-dire l'influence que les différents bruits ont les uns sur les autres. Une décomposition de Cholesky d'une matrice $M$ est effectuée selon la formule $M = G \times G^H$ où $G$ est une matrice triangulaire supérieure, $G^H$ étant le transconjugé de la matrice G, c'est-à-dire la transposée de la matrice G dans laquelle on a remplacé tous les nombres complexes par leurs conjugués. Ce traitement permet de décorréler les différentes sources de bruit.

Dans un mode de réalisation particulier, le procédé objet de l'invention comprenant en outre

- au moins une phase d'estimation des composantes du vecteur s, comprenant au moins une première étape d'estimation au cours de laquelle au moins une composante du vecteur s est estimée en fonction d'au moins une autre composante du vecteur s estimée préalablement,
- au moins une étape de changement d'une base vectorielle dans laquelle est exprimé le vecteur s, préalablement à au moins une deuxième étape d'estimation des composantes du vecteur s,
- une étape de sélection d'au moins une composante du vecteur s estimée au cours de l'une desdites étapes d'estimation ;
- une étape de reconstitution du vecteur s traité à partir desdites composantes sélectionnées.

Ainsi, on exprime le vecteur s traité dans deux bases vectorielles distinctes. Le vecteur s traité est ensuite estimé dans chacune des bases vectorielles. On peut donc estimer deux valeurs distinctes de chaque composante du vecteur s traité et donc de chaque signal émis. Les composantes du vecteur s traité les moins précisément estimées dans la première base sont différentes de celles estimées le moins précisément dans la deuxième base. Ainsi, on dispose de plusieurs estimations distinctes d'une même composante du vecteur s traité et on peut choisir, pour chaque signal émis, l'estimation la meilleure. Lorsque les vecteurs d'une des deux bases vectorielles sont les mêmes que ceux de l'autre base dans un ordre différent, les relations entre le vecteur s traité exprimé dans la première base et le vecteur s traité exprimé dans la deuxième sont donc très simples et permettent d'augmenter l'efficacité de la reconstitution sans pour autant trop augmenter le temps de traitement.

Un autre objet de l'invention est un dispositif de traitement d'interférences affectant N signaux respectivement émis par N terminaux appartenant à un réseau de communication, lesdits N signaux émis formant les composantes d'un vecteur s.

Un tel dispositif comprend :

- des moyens de prétraitement du vecteur s mettant en oeuvre une annulation des interférences générées entre les différents signaux émis délivrant un vecteur s prétraité,
- des moyens de traitement du vecteur s prétraité en vue de réduire l'influence d'interférences externes au système de communication sur lesdits signaux émis délivrant un vecteur s traité.

Un autre objet de l'invention est un programme d'ordinateur, caractérisé en ce qu'il comprend des instructions de code de programme pour la mise en oeuvre des étapes du procédé selon la revendication 1 lorsque le programme est exécuté par un processeur.

Un autre objet de l'invention est un support de données comprenant des moyens de stockage d'un programme d'ordinateur selon l'invention.

Enfin, un autre objet de l'invention est une mise à disposition d'un programme d'ordinateur selon l'invention, en vue de son téléchargement.

L'invention sera mieux comprise à la lecture de la description qui va suivre, donnée uniquement à titre d'exemple et faite en se référant aux dessins dans lesquels :

- la figure 1 représente un système de transmission comprenant un dispositif de reconstitution selon un mode de réalisation de l'invention,
- la figure 2 est un diagramme représentant un procédé de reconstitution selon un mode de réalisation de l'invention.

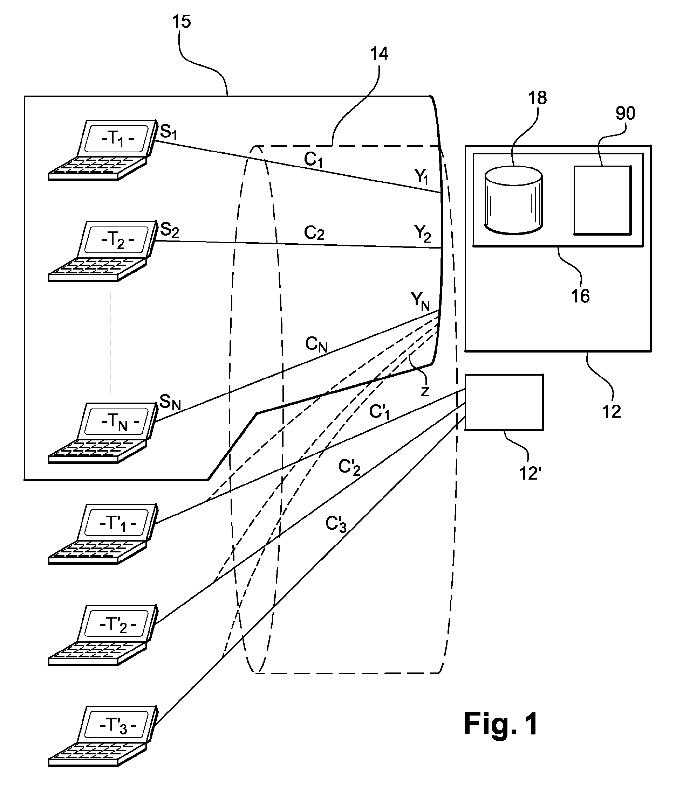

On a représenté sur la figure 1 des terminaux $T_1$, $T_2$, ..., $T_N$, $T_{1'}$, $T_{2'}$, ....$T_{M'}$, $N \neq M'$ formés par exemple par les modems des utilisateurs. Les terminaux $T_1$ à $T_N$ sont gérés par un premier opérateur de télécommunications. Les terminaux $T_{1'}$, $T_{2'}$ et $T_{M'}$ sont gérés par un deuxième opérateur de télécommunications distinct du premier opérateur. Chaque terminal $T_1$, ..., $T_N$ est relié à un multiplexeur DSLAM 12 commun à ces terminaux par l'intermédiaire de lignes actives respectives $C_1$, $C_2$,..., $C_N$. Les terminaux $T_{1'}$ à $T_{M'}$, sont reliés à un autre multiplexeur DSLAM 12' qui leur est commun, par l'intermédiaire de lignes actives $C_{1'}$, $C_{2'}$, $C_{M'}$. Toutes les lignes actives $C_1$, ..., $C_N$, $C_{1'}$, ...,$C_{M'}$ sont localisées dans un même câble 14 et correspondent chacune à une paire de fils de cuivre constitutive du câble 14. Ces lignes actives permettent notamment de transmettre des signaux DSL émis par chaque terminal vers le multiplexeur 12, 12' concerné.

Les terminaux $T_{1'}$, ..., $T_N$ et les lignes actives $C_1$, ..., $C_N$ associées et le multiplexeur 12 forment un premier système de transmission 15 géré par le premier opérateur.

Le multiplexeur DSLAM 12 comprend un dispositif 16 de traitement des interférences affectant des signaux $s_1$, ..., $s_N$, émis par les terminaux respectifs $T_1$,..., $T_N$ à partir des signaux reçus $y_1$, ..., $y_N$, par le multiplexeur 12. Ce dispositif 16 comprend une carte préprogrammée intégrée dans le DSLAM comportant une mémoire 18 formant un moyen de stockage d'un programme d'ordinateur permettant de mettre en oeuvre un procédé décrit par la suite, et des moyens 20 permettant de commander l'exécution du programme d'ordinateur, ces moyens comprenant notamment un processeur.

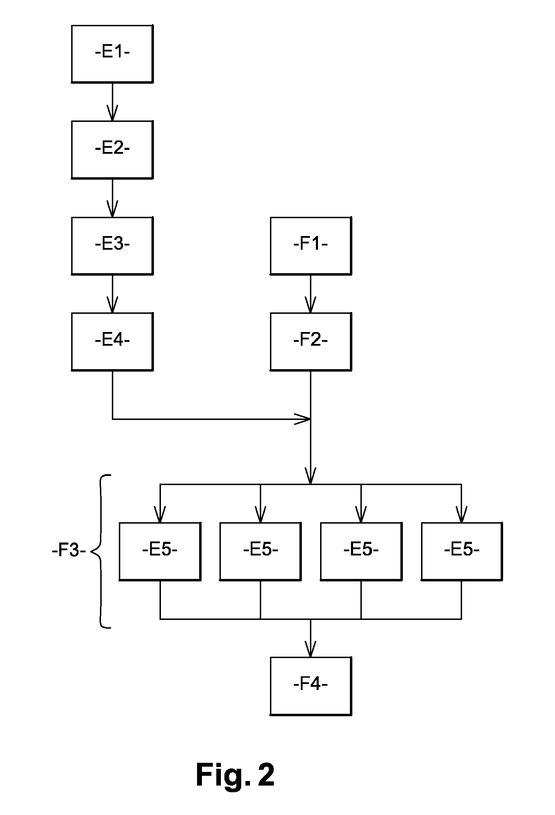

Nous allons maintenant décrire, en référence à la figure 2, un procédé de reconstitution selon un premier mode de réalisation de l'invention.

Ce procédé fait suite à la réception par le multiplexeur DSLAM 12 de signaux émis par les terminaux $T_1$, ..., $T_N$, transmis sur les lignes actives $C_1$, ..., $C_N$. Les signaux reçus par le multiplexeur 12, ne sont pas semblables aux signaux émis, car ils ont été perturbés lors de leur transmission, notamment par des signaux z émis par les terminaux $T_{1'}$, ... $T_{M'}$ externes au système.

Les signaux reçus sont exprimés de la façon suivante :

$$y = Hs + Az + n \qquad (1)$$

Dans cette formule :

- s est un vecteur représentant les signaux émis par les différents terminaux appartenant au système,
- H est la matrice de réponse du système, une telle matrice de réponse du système est une matrice diagonalement dominante. La matrice H de réponse du système est une matrice diagonalement dominante car les câbles constitutifs du système sont agencés lors de la fabrication de sorte à limiter les effets des interférences,
- A est une matrice représentant le couplage des signaux émis par des terminaux externes au système avec les signaux émis par des terminaux du système,
- z est un vecteur représentant les signaux émis par les terminaux $T_{1'}$, ... $T_{M'}$, externes au système et
- n est un vecteur représentant le bruit inhérent au système (interférences entre les différents signaux émis).

L'expression du signal reçu $y$ dans la formule (1) est fréquentielle, c'est-à-dire qu'un signal reçu est exprimé pour chaque fréquence porteuse $f$ des signaux émis. Le procédé est décrit pour une fréquence porteuse donnée, c'est pourquoi, afin de simplifier les notations, l'indice f est supprimé.

Chacun des N signaux émis par les terminaux $T_1$, ..., $T_N$ est représenté par un vecteur de référence. Chacun de ces vecteurs de référence correspond, par conséquent à une ligne active du système. L'ensemble de ces N vecteurs de référence constitue une base vectorielle de référence $B_R$ dans laquelle sont exprimés notamment le vecteur s représentant les signaux émis par les différents terminaux $T_1$ à $T_N$ et le vecteur y représentant les signaux reçus par le multiplexeur DSLAM 12.

L'expression du signal reçu $y$ est fréquentielle, c'est-à-dire qu'un signal reçu est exprimé pour chaque fréquence porteuse f des signaux émis.

Ce procédé permet de reconstituer des signaux proches des signaux émis par les terminaux, pour éviter toute perte de débit dans les lignes actives $C_1$, ..., $C_N$.

Le procédé comprend ensuite une étape E2 de multiplication du vecteur de signaux reçus $y$ par la matrice $H^{-1}$, inverse de la matrice de réponse du système déterminée au cours d'une étape E1, de sorte que le vecteur des signaux reçus et traités après l'étape E2 s'exprime de la façon suivante :

$$\hat{y} = H^{-1}y = s + \tilde{n} \qquad (2)$$

où

$$\widetilde{n} = H^{-1}n' = H^{-1}(Az + n)$$

Cette étape E2 correspond à une étape de traitement du signal reçu en vue d'éliminer les interférences internes au système.

On considère que le multiplexeur DSLAM 12 connaît la matrice de corrélation spatiale du bruit $R_{n', n'}$.

Cette matrice $R_{n', n'}$ à pour expression :

$$R_{\widetilde{n},\widetilde{n}} = \widetilde{A}\widetilde{A}^H \xi_z + \xi_n I \quad (3)$$

Dans cette formule :

- $\tilde{A}^H$ est la matrice transconjugée de $\tilde{A}$, c'est-à-dire la transposée de cette matrice dans laquelle les nombres complexes ont été remplacés par leurs conjugués,
- $I$ est la matrice identité, et
- $\xi_z$ et $\xi_n$ sont les puissances respectives des signaux z externes au système et du bruit blanc n.

La matrice de corrélation spatiale du bruit après annulation d'interférences $R_{\widetilde{n},\widetilde{n}}$ s'écrit alors :

$$R_{\widetilde{n},\widetilde{n}} = H^{-1}R_{n',n'}H^{-1^H}$$

Le procédé comprend ensuite une étape E3 de décomposition de Cholesky de la matrice de corrélation spatiale du bruit. Lors de cette étape, le dispositif 16 décompose la matrice de corrélation spatiale du bruit en un produit de deux matrices selon la formule :

$$R_{\widetilde{n},\widetilde{n}} = G \times G^H$$

dans laquelle $G$ est une matrice triangulaire supérieure et $G^H$ sa matrice transconjugué. Cette décomposition est effectuée de façon classique. La matrice de blanchiment $W = G^{-1}$ est aussi calculée de manière classique.

Le procédé comprend ensuite une étape E4, lors de laquelle un filtre est appliqué au vecteur $\hat{y}$ représentant les signaux traités lors de l'étape E3 en multipliant ce vecteur par la matrice de blanchiment $W$.

Ainsi,

$$\widetilde{y} = W\hat{y} = Ws + W\widetilde{n} \quad (4)$$

Cette opération permet de décorréler le bruit externe plus des interférences résiduelles, et correspond à une étape de traitement des signaux $\hat{y}$ en vue de réduire l'influence des perturbateurs externes sur les lignes actives du système, les perturbateurs externes correspondant notamment aux terminaux $T_{1'},..., T_{M'}$.

Le procédé comprend ensuite une étape E5 d'estimation de chaque signal $s_1$, $s_2$, ...,$s_k$,..., $s_N$ émis par les terminaux $T_1$ à $T_N$ à partir de l'expression précédente. Comme la matrice de blanchiment $W$ est l'inverse d'une matrice triangulaire supérieure, la matrice $W$ est elle aussi une matrice triangulaire supérieure. D'où :

$$\hat{s}_i = \frac{1}{w_{i,i}}(\widetilde{y}_i - \sum_{k=i+1}^{N} w_{i,k}\hat{s}_k) \quad (5)$$

Ainsi, une valeur du signal émis par chaque terminal $T_1$, ..., $T_N$ peut être estimée en fonction d'une valeur du signal reçu correspondant traité mathématiquement et, éventuellement, en fonction des valeurs estimées des signaux émis par d'autres terminaux du système.

L'étape E2 permet d'annuler les interférences internes au système, les étapes E3 à E4 forment un ensemble PH1 d'étapes de blanchiment du bruit, et l'étape E5 formant une phase d'estimation des signaux émis.

Le procédé objet de l'invention permet ainsi de réduire le nombre et la complexité des calculs à effectuer pour estimer les signaux émis. En effet, un tel procédé nécessite moins d'opérations mathématiques pour obtenir une estimation des signaux émis que la solution de l'état de l'art.

En variante, la première étape de traitement n'est pas limitée à une multiplication du vecteur des signaux reçus par l'inverse de la matrice H de réponse du système d. On peut par exemple encore simplifier l'étape E1 en décomposant la matrice H de réponse du système en une somme de deux matrices, de sorte que :

$$H = D + E$$

avec :

- une matrice D comprenant les termes diagonaux de la matrice H et des termes non diagonaux nuls,
- une matrice E comprenant les termes non diagonaux de la matrice H et des termes diagonaux nuls.

D'où :

$$H = D(I - D^{-1} E)$$

Le produit de matrices $D^{-1} E$ comprend des termes plus petits que 1, la matrice H de réponse du système ayant, du fait de ses propriétés classiques, des termes diagonaux d'ordre de grandeur plus élevés que les termes non diagonaux. L'inverse de la matrice H de réponse du système peut de ce fait être approximée de la façon suivante à l'aide d'une décomposition en série :

$$H^{-1} \approx \widetilde{H} = (I - D^{-1}E - (D^{-1}E)^2)D^{-1}$$

La matrice D étant une matrice diagonale, il est encore plus simple de calculer $D^{-1}$ que $H^{-1}$. Cette variante permet donc d'améliorer encore le temps de traitement de la reconstitution.

Bien que permettant de réduire la complexité et le nombre des calculs à effectuer afin d'estimer les signaux émis au niveau du multiplexeur DSLAM 12, une valeur du signal émis par le terminal $T_N$, est estimée uniquement en fonction du signal reçu par le DSLAM 12, alors qu'une valeur du signal émis par le terminal $T_1$ est estimée en fonction du signal reçu par le DSLAM 12 mais également en fonction de tous les autres signaux déjà estimés $T_2$ à $T_N$.

Une telle estimation s'avère suffisante pour le signal émis par le 1er terminal, car il bénéficie des estimations des signaux émis par les autres terminaux. La ligne active correspondante présente alors une qualité de service satisfaisante, notamment quant au débit.

Toutefois, les lignes actives associées à des terminaux de rang élevé tel que le terminal N ne présentent pas une qualité de service suffisante.

Afin de pallier cet inconvénient, le procédé comprend une série d'étapes supplémentaires.

Le procédé comprend également une étape F1 de détermination d'une ou plusieurs bases vectorielles dans lesquelles seront également exprimés les signaux reçus. Ces bases vectorielles sont choisies en fonction de paramètres relatifs à la qualité de service (QoS) demandée par chaque terminal. Ces paramètres comprennent notamment un paramètre relatif au débit demandé, en fonction, par exemple, de l'abonnement souscrit, et/ou un paramètre relatif à l'état de la file d'attente de chaque terminal, de façon à effectuer une meilleure estimation du signal émis par le terminal qui a le plus d'informations à transmettre, et/ou un paramètre relatif à l'état de chaque ligne active, de façon à effectuer une meilleure estimation pour une ligne active ayant la plus forte atténuation ou subissant le plus l'impact du bruit externe.

Dans un mode de réalisation particulier du procédé objet de l'invention, le dispositif 16 applique, au cours de l'étape F1, une fonction de permutation $P_i$, déterminée en fonction des paramètres énumérés ci-dessus, aux vecteurs de la base de référence $B_R$ de façon à obtenir une ou plusieurs bases $B^{(i)}$ dans lesquelles, pour un vecteur X donné, exprimé dans la base $B_R$, le vecteur $X_i$ correspondant, exprimé dans la base $B^{(i)}$ est tel que $X_i = P_i \times X$.

Dans chaque base $B^{(i)}$, les vecteurs de référence de la base $B_R$ ne changent pas, seul l'ordre de ces vecteurs dans la famille formée par la base est modifié.

Pour une matrice M exprimée dans la base de référence $B_R$ (par exemple, les matrices *H* ou *W*), la matrice correspondante $M_i$ exprimée dans la base $B^{(i)}$ sera la suivante :

$$M_i = P_i \times M \times P_i^T,$$

du fait des formules classiques et des propriétés des matrices de permutation.

Dans la suite, on considère que N = 6, que tous les terminaux $T_1, ...T_N$ demandent une qualité de service identique et que les estimations dans la base de référence permettent d'obtenir une qualité de service suffisante seulement pour les signaux émis par deux terminaux, $T_1$ et $T_2$.

Pour que les qualités de service soient conformes à celles demandées, on détermine deux bases distinctes de la base $B_R$, les bases B' et B", dans lesquelles les signaux émis sont exprimés comme suit :

$$s' = \begin{pmatrix} s'_1 \\ s'_2 \\ s'_3 \\ s'_4 \\ s'_5 \\ s'_6 \end{pmatrix}_{B'} = \begin{pmatrix} s_3 \\ s_4 \\ s_5 \\ s_6 \\ s_1 \\ s_2 \end{pmatrix}_{B'} \text{ ce qui signifie que } P' = \begin{pmatrix} 0 & 0 & 1 & 0 & 0 & 0 \\ 0 & 0 & 0 & 1 & 0 & 0 \\ 0 & 0 & 0 & 0 & 1 & 0 \\ 0 & 0 & 0 & 0 & 0 & 1 \\ 1 & 0 & 0 & 0 & 0 & 0 \\ 0 & 1 & 0 & 0 & 0 & 0 \end{pmatrix}$$

et

$$s'' = \begin{pmatrix} s''_1 \\ s''_2 \\ s''_3 \\ s''_4 \\ s''_5 \\ s''_6 \end{pmatrix}_{B''} = \begin{pmatrix} s_5 \\ s_6 \\ s_1 \\ s_2 \\ s_3 \\ s_4 \end{pmatrix}_{B''} \text{ ce qui signifie que } P'' = \begin{pmatrix} 0 & 0 & 0 & 0 & 1 & 0 \\ 0 & 0 & 0 & 0 & 0 & 1 \\ 1 & 0 & 0 & 0 & 0 & 0 \\ 0 & 1 & 0 & 0 & 0 & 0 \\ 0 & 0 & 1 & 0 & 0 & 0 \\ 0 & 0 & 0 & 1 & 0 & 0 \end{pmatrix}$$

Le procédé comprend ensuite une étape F2 d'expression dans la base vectorielle B' et dans la base vectorielle B", à l'aide des matrices de changement de base vectorielle déterminées lors de l'étape F1, des signaux reçus.

Au cours d'une étape F3, l'ensemble d'étapes PH1 d'estimation des signaux émis est alors reproduit dans chacune des bases vectorielles B' et B".

L'ensemble des étapes F1 à F3 constitue un mode de réalisation du procédé objet de l'invention dit mode parallèle. En effet, dans un tel mode de réalisation, l'estimation de chaque coordonnée du vecteur s représentant les signaux émis exprimé dans une première base vectorielle par exemple la base vectorielle B', se fait indépendamment de l'estimation des mêmes composantes du vecteur s représentant les signaux émis exprimé dans une deuxième base vectorielle, par exemple la base vectorielle B". On obtient alors deux estimations du vecteur s représentant les signaux émis dans deux bases vectorielles distinctes.

Suite à l'étape F3, le procédé objet de l'invention comprend, pour chaque base vectorielle, une étape F4 de sélection des composantes estimées, ou signaux estimés, du vecteur s représentant les signaux émis. Ici les composantes estimées sont celles dont l'indice dans la base vectorielle considérée sont les plus petits. Par exemple, les signaux estimés pour lesquels on obtient une estimation satisfaisante sont, dans la base B', les signaux estimés $\hat{s}'_1$ et $\hat{s}'_2$ (correspondant aux signaux estimés $\hat{s}_3$ et $\hat{s}_4$ de la base de référence $B_R$) qui ont été estimés en fonction des

estimations des signaux $\hat{s}'_6$, $\hat{s}'_5$, $\hat{s}'_4$, $\hat{s}'_3$ pour le signal $\hat{s}'_3$ et $\hat{s}'6$, $\hat{s}'_5$, $\hat{s}'_4$, $\hat{s}'_3$, $\hat{s}'_2$ pour le signal $\hat{s}'_1$. Dans la base B" les signaux estimés pour lesquels on obtient une estimation satisfaisante sont les signaux estimés $\hat{s}''_1$ et $\hat{s}''_2$ (correspondant aux signaux $s_5$ et $s_6$ de la base de référence $B_R$). Lors de cette étape, on obtient donc le vecteur des signaux émis estimés suivant, exprimé dans la base de référence :

$$\hat{s} = \begin{pmatrix} \hat{s}_1 \\ \hat{s}_2 \\ \hat{s}'_1 \\ \hat{s}'_2 \\ \hat{s}''_1 \\ \hat{s}''_2 \end{pmatrix}_{B_R}$$

Grâce au procédé selon l'invention, il est donc possible d'obtenir des estimations satisfaisantes pour tous les signaux émis.

Les bases vectorielles $B_R$ et B' et B" choisies peuvent aussi être liées par des relations autres que des relations de permutation.

Enfin, le canal de transmission n'est pas limité à un câble à paire de fils de cuivre.

**Revendications**

1. Procédé de traitement d'interférences affectant N signaux ($s_i$) respectivement émis par N terminaux ($T_i$, $T_{i'}$) appartenant à un réseau de communication, lesdits N signaux émis formant les composantes d'un vecteur s, **caractérisé en ce que** ledit procédé comprend :

    - une phase de prétraitement (E2) du vecteur s mettant en oeuvre une annulation des interférences générées entre les différents signaux émis délivrant un vecteur s prétraité,
    - une phase de traitement (E3-E4, E5) du vecteur s prétraité en vue de réduire l'influence d'interférences externes au système de communication sur lesdits signaux émis délivrant un vecteur s traité.

2. Procédé selon la revendication 1, dans lequel la phase de prétraitement comprend une étape de multiplication (E2) du vecteur s par une matrice inverse d'une matrice de réponse du système.

3. Procédé selon la revendication 1, dans lequel la phase de traitement comprend une étape de multiplication (E4) du vecteur prétraité par l'inverse d'une matrice triangulaire supérieure issue d'une étape de décomposition d'une matrice $R_{\tilde{n},\tilde{n}}$ de corrélation de bruit liée au vecteur s en un produit d'une matrice triangulaire supérieure et d'une matrice transconjugée de ladite matrice triangulaire supérieure.

4. Procédé selon la revendication 1 comprenant en outre :

    - au moins une phase d'estimation des composantes du vecteur s, comprenant au moins une première étape d'estimation (E5) au cours de laquelle au moins une composante du vecteur s est estimée en fonction d'au moins une autre composante du vecteur s estimée préalablement,
    - au moins une étape de changement (F2) d'une base vectorielle dans laquelle est exprimé le vecteur s, préalablement à au moins une deuxième étape d'estimation des composantes du vecteur s,
    - une étape de sélection (F4) d'au moins une composante du vecteur s estimée au cours de l'une desdites étapes d'estimation ;
    - une étape de reconstitution du vecteur s traité à partir desdites composantes sélectionnées.

5. Dispositif de traitement (16) d'interférences affectant N signaux respectivement émis par N terminaux appartenant à un réseau de communication, lesdits N signaux émis formant les composantes d'un vecteur s, **caractérisé en ce que** ledit dispositif comprend :

- des moyens (20) de prétraitement du vecteur s mettant en oeuvre une annulation des interférences générées entre les différents signaux émis délivrant un vecteur s prétraité,
- des moyens (20) de traitement du vecteur s prétraité en vue de réduire l'influence d'interférences externes au système de communication sur lesdits signaux émis délivrant un vecteur s traité.

6. Programme d'ordinateur, **caractérisé en ce qu'**il comprend des instructions de code de programme pour la mise en oeuvre des étapes du procédé selon la revendication 1 lorsque le programme est exécuté par un processeur.

7. Support de données, **caractérisé en ce qu'**il comprend des moyens de stockage d'un programme d'ordinateur selon la revendication précédente.

Fig. 1

Fig. 2

Europäisches
Patentamt

European
Patent Office

Office européen
des brevets

**RAPPORT DE RECHERCHE EUROPEENNE**

Numéro de la demande

EP 09 15 5912

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHIANG-YU CHEN ET AL: "Optimized Resource Allocation for Upstream Vectored DSL Systems With Zero-Forcing Generalized Decision Feedback Equalizer" IEEE JOURNAL OF SELECTED TOPICS IN SIGNAL PROCESSING, vol. 1, no. 4, 1 décembre 2007 (2007-12-01), pages 686-699, XP011199160 IEEE, US ISSN: 1932-4553 * abrégé * Chapitres I-VII * figure 1 * | 1-7 | INV. H04L27/26 H04B3/32 |
| X | ----- MINHO CHEONG ET AL: "Crosstalk cancellation in digital subscriber lines using multidimensional coordination" IEEE INTERNATIONAL CONFERENCE ON COMMUNICATIONS, 2005 - ICC 2005, vol. 3, 16 mai 2005 (2005-05-16), - 20 mai 2005 (2005-05-20) pages 1942-1946, XP010826211 NJ, USA ISBN: 978-0-7803-8938-0 * abrégé * Chapitres I-V * figures 1-7 * ----- -/-- | 1-7 | DOMAINES TECHNIQUES RECHERCHES (IPC) H04L H04B |

Le présent rapport a été établi pour toutes les revendications

| Lieu de la recherche | Date d'achèvement de la recherche | Examinateur |
|---|---|---|
| La Haye | 24 avril 2009 | Dhibi, Youssef |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

# EP 2 107 750 A1

**Europäisches Patentamt**
**European Patent Office**
**Office européen des brevets**

## RAPPORT DE RECHERCHE EUROPEENNE

Numéro de la demande

EP 09 15 5912

| | DOCUMENTS CONSIDERES COMME PERTINENTS | | |
|---|---|---|---|
| Catégorie | Citation du document avec indication, en cas de besoin, des parties pertinentes | Revendication concernée | CLASSEMENT DE LA DEMANDE (IPC) |
| X | GINIS G ET AL: "Vectored-DMT: a FEXT canceling modulation scheme for coordinating users" IEEE INTERNATIONAL CONFERENCE ON COMMUNICATIONS 2001 - ICC 2001, vol. 1, 11 juin 2001 (2001-06-11), - 14 juin 2001 (2001-06-14) pages 305-309, XP010553013 NY, US ISBN: 978-0-7803-7097-5 * abrégé * Chapitres I-VI * figures 1-7 * | 1-7 | |
| X | GINIS G; PENG C-N: "Alien crosstalk cancellation for multipair digital subscriber line systems" EURASIP JOURNAL ON APPLIED SIGNAL PROCESSING, vol. 2006, 2006, pages 1-12, XP002508550 Hindawi Publishing Corporation, US * abrégé * Chapitres 1-5 * figures 1,2,8-10 * | 1-7 | DOMAINES TECHNIQUES RECHERCHES (IPC) |
| A | LESHEM A ET AL: "A low complexity coordinated fext cancellation for VDSL" PROCEEDINGS OF THE11TH IEEE INTERNATIONAL CONFERENCE ON ELECTRONICS, CIRCUITS AND SYSTEMS, 2004 - ICECS 2004, 13 décembre 2004 (2004-12-13), - 15 décembre 2004 (2004-12-15) pages 338-341, XP010774212 NJ, US ISBN: 978-0-7803-8715-7 * abrégé * Chpitres 1-4 -/-- | 1-7 | |

Le présent rapport a été établi pour toutes les revendications

| Lieu de la recherche | Date d'achèvement de la recherche | Examinateur |
|---|---|---|
| La Haye | 24 avril 2009 | Dhibi, Youssef |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

13

Europäisches
Patentamt

European
Patent Office

Office européen
des brevets

**RAPPORT DE RECHERCHE EUROPEENNE**

Numéro de la demande

EP 09 15 5912

| Catégorie | Citation du document avec indication, en cas de besoin, des parties pertinentes | Revendication concernée | CLASSEMENT DE LA DEMANDE (IPC) |
|---|---|---|---|
| A | KATSUTOSHI KUSUME ET AL: "Cholesky Factorization With Symmetric Permutation Applied to Detecting and Precoding Spatially Multiplexed Data Streams" IEEE TRANSACTIONS ON SIGNAL PROCESSING, vol. 55, no. 6, 1 juin 2007 (2007-06-01), pages 3089-3103, XP011181949 NY, US ISSN: 1053-587X * abrégé * Chapitres I-V ----- | 1-7 | |

**DOCUMENTS CONSIDERES COMME PERTINENTS**

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 24 avril 2009 | Dhibi, Youssef |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)